(19) **Europäisches Patentamt**

**European Patent Office**

**Office européen des brevets**

(11) **EP 1 069 088 A1**

## (12) EUROPEAN PATENT APPLICATION

(43) Date of publication:
**17.01.2001 Bulletin 2001/03**

(51) Int. Cl.[7]: **C03C 17/34**, G02B 1/10

(21) Application number: **00114906.1**

(22) Date of filing: **14.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **16.07.1999 JP 20379999**<br><br>(71) Applicant: **Asahi Glass Co., Ltd.**<br>**Tokyo 100-8405 (JP)** | (72) Inventors:<br>• **Kawasato, Fumiko**<br>  **Saiwai-ku, Kawasaki-shi, Kanagawa (JP)**<br>• **Wachi, Hiroshi**<br>  **Saiwai-ku, Kawasaki-shi, Kanagawa (JP)**<br>• **Shimoda, Hiroshi**<br>  **Kanagawa-ku, Yokohama-shi, Kanagawa (JP)**<br><br>(74) Representative:<br>**Müller-Boré & Partner**<br>**Patentanwälte**<br>**Grafinger Strasse 2**<br>**81671 München (DE)** |

(54) **Antiglare-antireflection film and process for producing it**

(57)     An antiglare-antireflection film which comprises a polyurethane resin layer having a surface with fine irregularities and an antireflection layer made of a non-crystalline fluorine-containing polymer provided on the surface with fine irregularities, and which is transparent as a whole.

**EP 1 069 088 A1**

**Description**

The present invention relates to an antiglare-antireflection film and a process for producing it.

In recent years, plasma display panels (hereinafter referred to as PDP) became used. Images of a PDP are visually observed through a front plate which is a glass plate, but the glass plate gets light from a fluorescent lamp and other light sources and reflects said light so that the light sources and the like will be reflected in the screen, which makes it hard to watch the images. To overcome such a problem, it has been proposed to dispose an antireflection film in front of the front plate of PDP (on the observer side), and many antireflection films and sheets have been proposed.

As an excellent antireflection film, e.g. an antireflection film as disclosed in JP-A-7-168005 has been known. This antireflection film is one obtained by forming an antireflection layer made of a non-crystalline fluorine-containing polymer on the surface of a polyurethane resin layer having self-healing properties and scratch resistance. Although this antireflection film has an excellent antireflection effect, the glariness on the surface is not sufficiently suppressed as the surface is smooth, and the film is insufficient in view of prevention of reflection of light sources or antiglare properties.

Accordingly, it is an object of the present invention to provide an antireflection film which is excellent in antireflection properties, and in addition, excellent in prevention of reflection of light sources and antiglare properties.

The present invention provides an antiglare-antireflection film which comprises a polyurethane resin layer having a surface with fine irregularities and an antireflection layer made of a non-crystalline fluorine-containing polymer provided on the surface with fine irregularities (hereinafter referred to also as antireflection layer), and which is transparent as a whole; a protective plate for PDP using said film; and a process for producing said film.

Now, the present invention will be described in detail with reference to the preferred embodiments.

In the accompanying drawings:

Figure 1 is a schematic drawing illustrating a cross section of the antiglare-antireflection film of the present invention.
Figure 2 is a schematic drawing illustrating a magnified cross section of part of Figure 1.
Figure 3 is a flowchart illustrating the production process of the present invention.
Figure 4 is a drawing illustrating one example of a protective plate for PDP.
Figure 5 is a drawing illustrating another example of a protective plate for PDP.

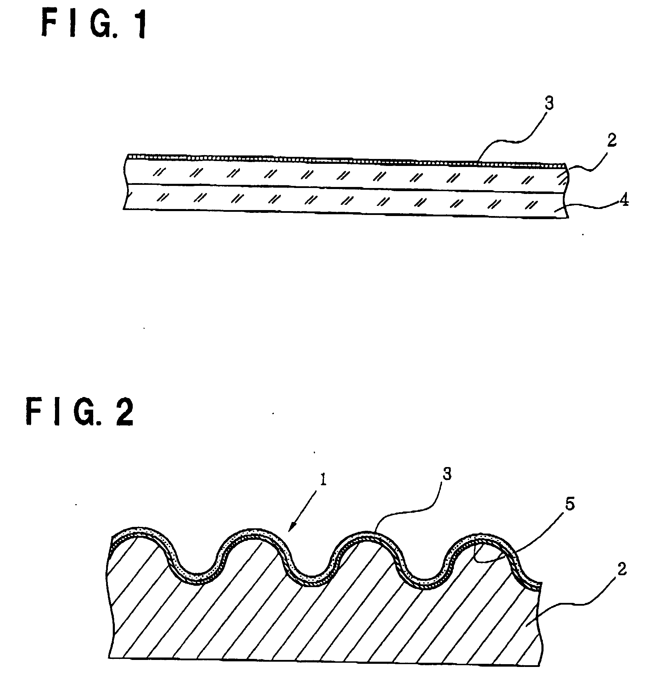

Figure 1 is a schematic drawing illustrating a cross section of the antiglare-antireflection film of the present invention, and Figure 2 is a partial magnification of Figure 1. The antiglare-antireflection film of the present invention, as shown in these Figures, comprises a polyurethane resin layer 2 having a surface with fine irregularities 1 and an antireflection layer 3 made of a non-crystalline fluorine-containing polymer provided on the surface with fine irregularities 1, and is transparent as a whole. In Figure 1, numeral 4 indicates a substrate film required when the polyurethane resin layer is formed, and is not essential for the antiglare-antireflection film of the present invention. However, it is preferably used together with the polyurethane resin layer 2 as part of the antiglare-antireflection film. Further, in Figure 2, numeral 5 indicates an adhesive layer, and is provided in a case where the adhesion between the antireflection layer 3 and the polyurethane resin layer 2 is insufficient, but is not essential when the adhesion is sufficient.

In the above-mentioned structure, as the substrate film 4, a sheet or film of a resin having excellent strength and transparency such as polyethylene terephthalate may, for example, be used. The thickness of said substrate film 4 is preferably from about 50 to about 500 μm, particularly preferably from about 50 to about 250 μm. The thickness of the polyurethane resin layer 2 is preferably from about 100 to about 500 μm, particularly preferably from about 100 to about 300 μm. The polyurethane resin layer 2 preferably has self-healing properties, and if its thickness is less than 100 μm, it is less likely to have excellent self-healing properties, and tends to have permanent scratches easily, such being problematic practically. On the other hand, if the thickness exceeds 500 μm, the curing of the polyurethane resin layer tends to be incomplete and there is a possibility that isocyanate groups remain, which may be an impediment when the antiglare-antireflection film is used.

The fine irregularities 1 formed on the surface of the polyurethane resin layer 2 have a roughness represented by a gloss value of preferably from 30 to 150, more preferably from about 50 to about 130, as measured by a 60° glossmeter. If the gloss value is less than 30, the irregularities on the surface tend to be too intense, and the transmitted light tends to decay, whereby it tends to be hard to watch the images. On the other hand, if it exceeds 150, the irregularities on the surface tend to be too small, and the antiglare properties will disappear, whereby the reflection of e.g. light sources tends to be intense. Such a gloss value may optionally be adjusted by changing the method for forming the irregularities or the type of a matted film for transferring the irregularities as mentioned hereinafter.

Before the formation of the antireflection layer 3 made of a non-crystalline fluorine-containing polymer, as the case requires, a corona discharge treatment may be applied to the polyurethane resin layer, or an adhesive layer 5 or an interlayer as mentioned hereinafter, which is not shown in Figures, may be formed. The thickness of the antireflection layer 3 is preferably from 10 to 1,000 nm, particularly preferably from 20 to 500 nm.

Further, between the above antireflection layer 3 and the polyurethane resin layer 2, an interlayer made of a resin having a refractive index higher than that of said polyurethane resin layer, may be provided, although it is not shown in Figures. The thickness of said interlayer is preferably from 10 to 1,000 nm, particularly preferably from 20 to 500 nm, so as not to inhibit functions of the layer made of a polyurethane resin.

The antiglare-antireflection film of the present invention having the above basic structure, is transparent as a whole including the substrate film 4, and has a visible light transmittance (hereinafter referred to simply as transmittance) of preferably at least 80%, more preferably at least 85%, particularly preferably at least 90%. If the transmittance is less than 80%, the brightness of the images tends to be insufficient when the images of PDP are watched through the antiglare-antireflection film. The transmittance may optionally be adjusted by selection of each material, the thickness of each layer, or the use of a bulking agent.

Further, the haze value of the antiglare-antireflection film of the present invention is preferably within a range of from 3 to 15%. Particularly when said film is used for a large size display such as PDP, since the reflected image is large in the large screen, the haze value is preferably from 6 to 15%. Further, when it is used for a display for a notebook-sized personal computer or desktop personal computer, the reflected image is not so large as compared with PDP, on the other hand, a high-definition screen is required, and accordingly the haze value is preferably from 3 to 5%. Here, the antiglare-antireflection film of the present invention may be colored so long as it is essentially transparent, or patterns or characters may be put thereon by e.g. printing.

Now, materials constituting the antiglare-antireflection film of the present invention will be described in further detail.

As the substrate film 4, a film or sheet of the above polyethylene terephthalate or another polyester, a polypropylene, a polyethylene, a polyvinyl chloride, a polycarbonate, a polyurethane or an acrylic resin, may be used.

The resin constituting the polyurethane resin layer 2 is preferably a thermosetting polyurethane resin of two-pack type, and the resin layer is formed preferably by mixing a polyol component (liquid A), a polyisocyanate component (liquid B) and a catalyst (and by further mixing a chain extender therewith as the case requires). As the liquid A, any known polyol to be used for producing a polyurethane resin, such as a polyether type polyol, a polyester type polyol or a polycarbonate type polyol, may be used. A polyester type polyol is preferred in view of the balance among durability, price, strength and scratch resistance, and self-healing properties, of the polyurethane resin layer to be formed. The number of its functional groups (hydroxide groups) is preferably greater than 1 on the average, and it is more preferably from 2 to 3 from the viewpoint of the balance among the strength, elongation, self-healing properties and scratch resistance. Further, as the chain extender to be used as the case requires, a short-chain diol, a short-chain polyol, a short-chain diamine or a short-chain polyamine may, for example, be mentioned, and a short-chain diol is preferred from the viewpoint of transparency and flexibility.

Further, as the liquid B, any know polyisocyanate to be used for producing a polyurethane resin, such as an aromatic diisocyanate, an aromatic polyisocyanate, an aliphatic diisocyanate, an aliphatic polyisocyanate, an alicyclic diisocyanate or an alicyclic polyisocyanate, may be used. Preferred is an aliphatic or alicyclic diisocyanate or polyisocyanate, from the viewpoint of transparency of the polyurethane resin layer to be formed. These materials to be used alone or in combination as a mixture. Further, a stabilizer such as an ultraviolet light absorber, an antioxidant or a light stabilizer, or an additive such as a urethanating catalyst, an extender, a colorant or a frame retardant, may be added as the case requires. Here, the above stabilizer or additive may be added to either the liquid A or liquid B.

The non-crystalline fluorine-containing polymer which forms the antireflection layer 3 is excellent in transparency since it is free from light scattering by crystals. Such a non-crystalline fluorine-containing polymer may, for example, be 1) a fluoroolefin type copolymer such as a terpolymer comprising tetrafluoroethylene, vinylidene fluoride and hexafluoropropylene respectively in an amount of from 37 to 48 wt%, from 15 to 35 wt% and from 26 to 44 wt% as a monomer unit, or 2) a polymer having fluorine-containing aliphatic ring structures. Particularly preferred is a polymer having fluorine-containing aliphatic ring structures since it is excellent in mechanical properties such as creep resistance. The number average molecular weight of the above non-crystalline fluorine-containing polymer is preferably from 50,000 to 1,000,000, more preferably from 50,000 to 500,000, particularly preferably from 50,000 to 100,000.

Preferred as the polymer having fluorine-containing aliphatic ring structures, is one obtained by polymerizing a monomer having a fluorine-containing ring structure, or a polymer having ring structures on its main chain which is obtained by cyclic polymerization of a fluorine-containing monomer having at least two polymerizable double bonds.

A polymer having ring structures on its main chain, which is obtained by polymerizing a monomer having a fluorine-containing ring structure, is known from e.g. JP-B-63-18964. Namely, such a polymer may be obtained by homopolymerizing a monomer having a fluorine-containing ring structure such as perfluoro(2,2-dimethyl-1,3-dioxol), or by copolymerizing said monomer with a radical polymerizable monomer such as tetrafluoroethylene.

Further, a polymer having ring structures on its main chain, which is obtained by cyclic polymerization of a fluorine-containing monomer having at least two polymerizable double bonds, is known from e.g. JP-A-63-238111 and JP-A-63-238115. Namely, such a polymer may be obtained by cyclic polymerization of a monomer such as perfluoro(allyl vinyl ether) or perfluoro(butenyl vinyl ether), or by copolymerizing such a monomer with a radical polymerizable monomer such as tetrafluoroethylene.

Further, the above polymer having ring structures on its main chain may be a polymer obtained by copolymerizing a monomer having a fluorine-containing ring structure such as perfluoro(2,2-dimethyl-1,3-dioxol) with a fluorine-containing monomer having at least two polymerizable double donds such as perfluoro(allyl vinyl ether) or perfluoro(butenyl vinyl ether).

As the polymer having fluorine-containing aliphatic ring structures, a polymer having ring structures on its main chain is suitable, and preferred is one containing at least 20 mol% of monomer units having a ring structure in the monomer units constituting the polymer, from the viewpoint of transparency and mechanical properties. As other non-crystalline fluorine-containing polymers, perfluoro polyethers of the following formulae 1 and 2 having reactive groups at both terminals and having a number average molecular weight of from 500 to 100,000, preferably from 1,000 to 10,000, may be mentioned. Particularly preferred as the reactive groups, are isocyanate groups which will provide excellent adhesiveness to the polyurethane resin layer.

$$X\text{-}[(OCFR_1CF_2)_p\text{-}(OCF_2CF_2)_q\text{-}(OCF_2)_r]_m\text{-}OX \qquad \text{Formula 1}$$

wherein X is an organic group containing an isocyanate group, a hydroxyl group, an amino group, an epoxy group, an acrylate group, a methacrylate group, a cyanamide group or a maleimide group, $R_1$ is F or $CF_3$, and each of p, q, r and m is an integer.

$$HOCH_2Y\text{-}[(OCFR_2CF_2)_s\text{-}(OCF_2CF_2)_t\text{-}(OCF_2)_u]_n\text{-}Y\text{-}CH_2OH \qquad \text{Formula 2}$$

wherein Y is a perfluoroaliphatic group, $R_2$ is F or $CF_3$, and each of s, t, u and n is an integer.

Further, the above non-crystalline fluorine-containing polymer may be commercially available as CYTOP (trade name) manufactured by Asahi Glass Company, Limited, and any known fluorine-containing polymer may be used in the present invention. Here, in the present invention, in order to increase the adhesion between the antireflection layer and the polyurethane resin layer, 1) an adhesive layer may be provided between the above layers, or 2) an additive may be added to the antireflection layer. With respect to the above item 1), the thickness of said adhesive layer is preferably from 1 to 50 nm so as not to deteriorate the optical properties of the antiglare-antireflection film of the present invention, and with respect to the above item 2), the amount of the additive is preferably at most 50 parts by weight based on 100 parts by weight of the non-crystalline fluorine-containing polymer which forms the antireflection layer, from the same reason as mentioned above. As a material constituting the adhesive layer or additive, the following alkoxysilanes may be mentioned, and they may be used alone or in combination as a mixture of two or more of them:

Monoalkoxysilanes such as vinyltriethoxysilane, trimethylmethoxysilane, trimethylethoxysilane, dimethylvinylmethoxysilane and dimethylvinylethoxysilane; dialkoxysilanes such as γ-chloropropylmethyldimethoxysilane, γ-chloropropylmethyldiethoxysilane, γ-aminopropylmethyldiethoxysilane, γ-aminopropylmethyldimethoxysilane, N-β-(aminoethyl)-γ-aminopropylmethyldimethoxysilane, N-β-(aminoethyl)-γ-aminopropylmethyldiethoxysilane, γ-glycidoxypropylmethyldimethoxysilane, γ-glycidoxypropylmethyldiethoxysilane, γ-methacryloxypropylmethyldimethoxysilane, methyldimethoxysilane, methyldiethoxysilane, dimethyldimethoxysilane, dimethyldiethoxysilane, methylvinyldimethoxysilane, methylvinyldiethoxysilane, diphenyldimethoxysilane, diphenyldiethoxysilane, 3,3,3-trifluoropropylmethyldimethoxysilane, 3,3,4,4,5,5,6,6,7,7,8,8,8-tridecafluorooctylmethyldimethoxysilane and 3,3,4,4,5,5,6,6,7,7,8,8,9,9,10,10,10-heptadecafluorodecylmethyldimethoxysilane; and tri- or tetra-alkoxysilanes such as γ-aminopropyltrimethoxysilane, γ-aminopropyltriethoxysilane, N-β-(aminoethyl)-γ-aminopropyltrimethoxysilane, N-β-(aminoethyl)-γ-aminopropyltriethoxysilane, γ-mercaptopropyltrimethoxysilane, γ-glycidoxypropyltrimethoxysilane, γ-glycidoxypropyltriethoxysilane, γ-methacryloxypropyltrimethoxysilane, γ-chloropropyltrimethoxysilane, methyltriethoxysilane, phenyltrimethoxysilane, phenyltriethoxysilane, 3,3,3-trifluoropropyltrimethoxysilane, 3,3,4,4,5,5,6,6,7,7,8,8,8-tridecafluorooctyltrimethoxysilane, 3,3,4,4,5,5,6,6,7,7,8,8,9,9,10,10,10-heptadecafluorodecyltrimethoxysilane, tetramethoxysilane and tetraethoxysilane.

As particularly preferred ones which improve the adhesiveness to the polyurethane resin layer without impairing the transparency of the antireflection layer, the following may be mentioned:
γ-aminopropyltriethoxysilane, γ-amninopropylmethyldiethoxysilane, γ-aminopropyltrimethoxysilane, γ-aminopropylmethyldimethoxysilane, N-β-(aminoethyl)-γ-aminopropyltrimethoxysilane, N-β-(aminoethyl)-γ-aminopropylmethyldimethoxysilane, N-β-(aminoethyl)-γ-aminopropyltriethoxysilane and N-β-(aminoethyl)-γ-aminopropylmethyldiethoxysilane; γ-glycidoxypropyltrimethoxysilane having an epoxy group, γ-glycidoxypropylmethyldimethoxysilane having an epoxy group, γ-glycidoxypropyltriethoxysilane having an epoxy group and γ-glycidoxypropylmethyldiethoxysilane having an epoxy group.

More excellent antireflection effects will be obtained when 1) an interlayer made of a resin or 2) an interlayer made of an inorganic oxide, having a refractive index higher than that of the polyurethane resin, is provided between the antireflection layer 3 and the polyurethane resin layer 2. The refractive index of such an interlayer is preferably from 1.55 to 2.0, particularly preferably from 1.57 to 1.65.

In the case of the above item 1), the resin having a high refractive index is preferably a polymer having aromatic rings on its main chain or side chains, such as polystyrene, poly(o-chlorostyrene), poly(2,6-dichlorostyrene), poly(bromostyrene), poly(2,6-dibromostyrene), polycarbonate, aromatic polyester, polysulfone, polyethersulfone, polyarylsulfone, poly(pentabromophenyl methacrylate), a phenoxy resin or its brominated product, or an epoxy resin or its brominated product. Further, it is possible to increase the adhesiveness to the polyurethane resin layer or to the antireflection layer, by modifying the terminals of such resins with reactive functional groups.

Among the above resins, e.g. a phenoxy resin and an epoxy resin have reactive functional groups at the terminals without modification, and they are preferred from the viewpoint of the adhesive properties. A sulfone type polymer such as polysulfone, polyethersulfone or polyarylsulfone, which is a polymer containing sulfur atoms on its main chain, is also preferred. Further, an inorganic oxide such as $Al_2O_3$, $SnO_2$, $In_2O_3$, $Nd_2O_3$, $ZrO_2$, $TiO_2$, $Ta_2O_5$, $Y_2O_3$ or $CeO_2$ may also be preferably available. Further, an additive such as a plasticizer or a binder may be incorporated to the interlayer, as the case requires. Further, a conductive polymer or an inorganic oxide having conductivity may be used for the interlayer so as to impart antistatic properties.

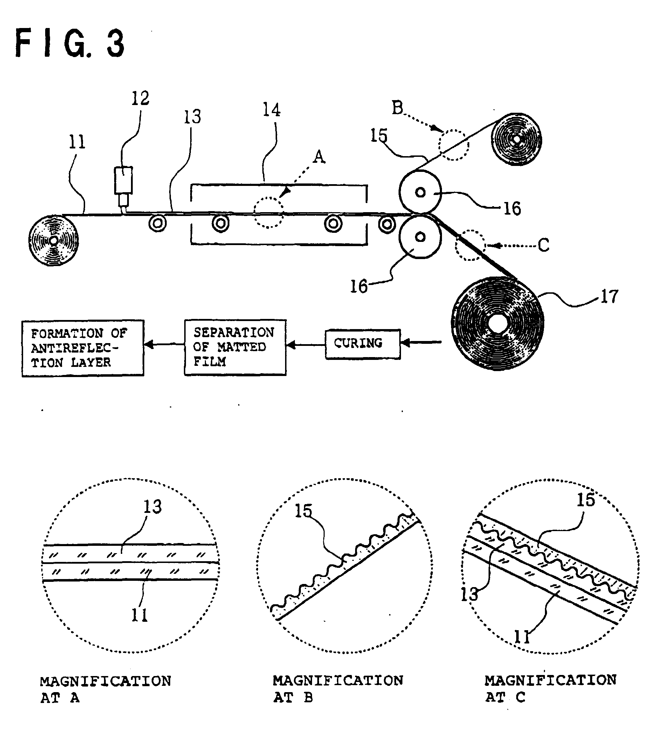

The present invention further provides a process for producing the antiglare-antireflection film. Figure 3 is a flowchart illustrating one example of the step for forming a polyurethane resin layer 13 having a surface with fine irregularities in the production process of the present invention. In the production process of the present invention, a substrate film 11 wound into a roll is pulled out, and one side of said film is coated with a liquid mixture of the liquid A and liquid B continuously released from a suitable blast nozzle 12 in such an amount that the coating thickness is within the above range, to form a coating layer 13. When the liquid A and liquid B in the coating layer 13 continuously pass through a heating furnace 14, they undergo polyaddition reaction to form a polyurethane resin. In the present invention, the liquid A and liquid B are made to react with each other to such an extent that the coating layer 13 is in a semicured state in which it is solidified at the outlet of the heating furnace 14 but keeps plasticity, by adjusting e.g. the feed rate of the substrate film 11, the heating temperature and the heating time of the heating furnace 14. The curing conditions vary depending upon the liquid A, the liquid B and the catalyst, but the curing is carried out usually at a temperature of from about 60 to about 130°C from about 5 to about 60 minutes.

Then, on the surface of the above semicured coating layer 13, a matted film 15 having a surface with fine irregularities is continuously laminated by a pair of rollers 16,16. By this lamination, the semicured coating layer 13 and the surface of the matted film 15 are in contact with each other under pressure by the rollers, and the fine irregularities on the surface of the matted film 15 will be transferred to the semicured coating layer 13. Since many matted films having various fine irregularities are commercially available, it is preferred to use as the matted film 15, a matted film having fine irregularities which will impart a roughness represented by a gloss value of from 30 to 150 as measured by a 60° glossmeter to the polyurethane resin layer 13. In this case, it is preferred to coat the surface with fine irregularities on the matted film with a separation agent such as silicon oil, as the case requires.

The laminate of the substrate film 11, the semicured polyurethane resin layer 13 and the matted film 15 is wound into a roll 17. This roll 17 is cured in a suitable furnace at a predetermined temperature for a predetermined time, whereby the reaction of the liquid A and the liquid B will be completed. After the completion of the reaction, the matted film 15 is separated to obtain a polyurethane resin layer 13 having a surface with fine irregularities. The above curing is one example, and the above laminate of three layers may not be wound into a roll, but may be made to continuously pass through another heating furnace which is not shown in Figure 3, so as to complete the above reaction, and then the matted film may be separated. Further, a matted film is used for forming fine irregularities in the above-mentioned example, however, the formation of the fine irregularities is not particularly limited to the use of a matted film, and it may be carried out by embossing rolls or another method.

On the surface with fine irregularities of the polyurethane resin layer 13 thus formed, the above-mentioned antireflection layer made of a non-crystalline fluorine-containing polymer is formed directly or by means of an adhesive layer or an interlayer. Said antireflection layer may be a single-layer film of a non-crystalline fluorine-containing polymer alone, or may be a multi-layer film by combination of materials having different refractive indices, as the case requires. In the case of a multi-layer film, it is preferable that each film is made of the same kind of material.

In the present invention, the process for forming the antireflection layer is not particularly limited, and an optional processing may be selected. For example, a polymer having fluorine-containing aliphatic ring structures is soluble in a certain specific fluorine type solvent such as perfluorooctane, $CF_3(CF_2)_nCH=CH_2(n:5-11)$ or $CF_3(CF_2)_mCH_2CH_3(m:5-11)$, and by coating and drying the solution of the polymer, it is possible to easily obtain an antireflection layer having a predetermined thickness, and the antiglare-antireflection film of the present invention can be obtained. As the coating method, dip coating, roll coating, spray coating, gravure coating, comma coating or die coating may, for example, be selected. By these coating methods, continuous processing is possible, whereby the productivity is excellent as compared with e.g. a vapor deposition method of a batch type.

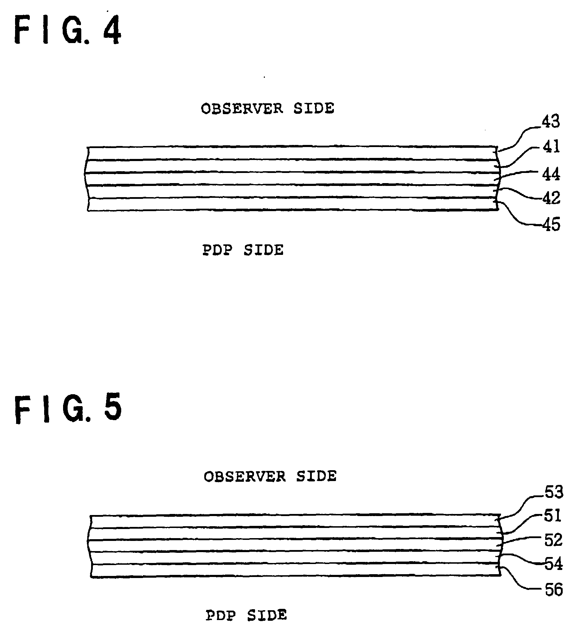

The present invention further provides a protective plate for PDP comprising the above antiglare-antireflection film. In Figure 4 is shown an example of a protective plate for PDP. Namely, this example shows a protective plate for PDP which comprises an electromagnetic wave shield obtained by laminating an antireflection film 45, a transparent film 42 having a metal (e.g. copper) mesh pattern, a near infrared ray shielding film 44 and a glass plate 41, and the antiglare-antireflection film 43 of the present invention laminated on said electromagnetic wave shield so that the antireflection layer faces outside. On said protective plate for PDP, various electromagnetic waves generated from PDP are shielded by the metal mesh pattern 42, and near infrared rays generated from PDP are shielded by the near infrared ray shielding film 44, and in addition, the antireflection and antiglare properties are imparted by the antiglare-antireflection film 43 of the present invention. Further, the possibility of occurrence of moiré due to interference between the metal mesh pattern 42 and picture elements of PDP will be reduced by the fine irregularities of the polyurethane resin layer provided on the antiglare-antireflection film 43, whereby more excellent images of PDP will be observed.

In Figure 5 is shown another example of the protective plate for PDP. Namely, this example shows a protective plate for PDP which comprises an electromagnetic wave shield obtained by laminating an antireflection film 56 which functions also as a moistureproof film, a near infrared ray shielding film 54, a transparent conductive coating 52 and a glass plate 51, and the antiglare-antireflection film 53 of the present invention laminated on said electromagnetic wave shield so that the antireflection layer faces outside. On said protective plate for PDP, various electromagnetic waves generated from PDP are shielded by the transparent conductive layer 52, and similarly, near infrared rays generated from PDP are shielded by the near infrared ray shielding film 54, and in addition, antireflection and antiglare properties are imparted by the antiglare-antireflection film 53 of the present invention, whereby excellent images of PDP will be observed. Further, since the antireflection film 56 has moisture resistance, deterioration of the transparent conductive coating 52 due to moisture will be prevented.

Here, around the periphery of the above metal mesh pattern or transparent conductive layer, an electrode having an optional shape and a colored ceramic layer are provided, which are not shown in Figures. The metal mesh pattern may be obtained, for example, by etching a metal plated layer into a mesh pattern by a known photolithography, and has an open area ratio of from about 60 to about 90%, since it is required to be transparent. Further, examples of the transparent conductive layer include single-layer transparent conductive films such as a film containing zinc oxide as the main component (e.g. zinc oxide film doped with aluminum), a film containing indium-tin oxide (ITO) as the main component and a film containing tin oxide as the main component. Particularly preferred as the transparent conductive layer 52, is a multi-layer coating composed of oxide and conductive metal layers alternately laminated on the glass plate 51 in a total of (2n+1) (n is an integer of at least 1) layers with the inner most and outer most layers being oxide layers, since a low sheet resistance, a low reflectance and a low visible light transmittance will be obtained. These oxide layers are preferably oxide layers containing ZnO as the main component, and the metal layer(s) is preferably a metal layer containing Ag as the main component (refer to WO98/13850 for detail).

The above explanation is made with reference to a protective plate for PDP wherein the antiglare-antireflection film and the electromagnetic wave shield are combined with each other. However, it is not essential to combine the antiglare-antireflection film with the electromagnetic wave shield, and a similar effect will be obtained when they are placed at no great distance, even if they are not combined.

The antiglare-antireflection film of the present invention may be used for the above application, and in addition, it may be used as stuck to a polarizing film or to a character or image information display, or as stuck to other films or sheets (including glass plates). As the display, CRT, LCD, a projection display or a LCD display may, for example, be mentioned. The method for sticking it to other films or sheets (including glass plates) is not particularly limited, and a method such as bonding, adhering or heat fusion may be selected. Such a film or sheet may be used as stuck to a front panel to be disposed in front of the display, for example, as a CRT filter, a LCD protective panel or a projection. Further, it is also useful as stuck to a touch panel or a pen-inputting screen.

Further, as the antiglare-antireflection film of the present invention has flexibility and elasticity, in the case of pen-inputting, the pen tip fits said film, and accordingly it is possible to stably input characters without a slip of the pen tip. Further, since the antiglare-antireflection film of the present invention has a surface with fine irregularities, the pen tip will not completely adhere to the film, and it is possible to move the pen tip smoothly. Accordingly, the user will have a feeling that he or she is writing with a pencil on paper.

Now, the present invention will be described in further detail with reference to Examples and Comparative Examples. However, it should be understood that the present invention is by no means restricted to such specific Examples.

EXAMPLE 1

A polyurethane resin layer was prepared as follows. Namely, a blend composition as identified in the upper part of Table 1, was melted and mixed under heating with stirring at 80°C for 3 hours to obtain a uniform liquid A. Further, a blend composition as identified in the lower part of Table 1, was melted and mixed under heating with stirring at 80°C for 3 hours to obtain a uniform liquid B. These liquids A and B were mixed in a weight ratio of 100:90.41.

Table 1

| Liquid A | (parts by weight) |
|---|---|
| Polycaprolactonetriol having a hydroxyl value of 196.4 | 50.00 |
| Polycaprolactonetriol having a hydroxyl value of 540.3 | 40.00 |
| Polycaprolactonediol having a hydroxyl value of 37.6 | 9.60 |
| Silicon-type extender (BYK-300) | 0.40 |
| Liquid B | (parts by weight) |
| Nuleate-modified*)hexamethyleneisocyanate having a NCO content of 21.4% | 89.94 |
| Isophorone diisocyanate | 5.00 |
| Hydrogenated MDI | 5.00 |
| Dibutyltin dilaurate | 0.06 |

*) Nuleate-modification is a polymerization of three molecules of isocyanate to form a triazine ring

A polyurethane resin layer was formed as follows. Namely, a polyethylene terephthalate film having a thickness of 100 μm was coated with a mixture of the liquids A and B by die coating in a coating thickness of 200 μm, and made to pass through an oven having its temperature adjusted at 120°C for 10 minutes so that the liquid A and the liquid B were reacted. On the surface of the resin layer thus reacted, a polyethylene terephthalate matted film having fine irregularities with a gloss value of 35 provided thereon was laminated by continuously passing these films through a pair of pressure rolls so as not to have wrinkles, and the fine irregularities on the matted film were transferred to the polyurethane resin layer. The laminate thus obtained was cured in such a state in an oven having its temperature adjusted at 60°C for 15 hours to complete the reaction of the liquid A and the liquid B.

Then, the matted film was separated and the polyurethane resin layer having a surface with fine irregularities was obtained. Corona discharge treatment was applied to the surface with fine irregularities of the polyurethane resin layer, and said surface was spin-coated with a solution having a primer solution (CT-P10, trade name, manufactured by Asahi Glass Company, Limited) diluted to 0.5 wt% with isobutyl acetate, and then spin-coated with a solution having a solution of a non-crystalline fluorine-containing polymer (number average molecular weight: 50,000-80,000) (solution of CYTOP "CTL-805A", trade name, manufactured by Asahi Glass Company, Limited) diluted to 2 wt% with a solvent (CT-SOLV180, trade name, manufactured by Asahi Glass Company, Limited), followed by heating at 140°C for 10 minutes to form an antireflection layer in a thickness of about 100 nm, and an antiglare-antireflection film of the present invention was obtained.

The antiglare-antireflection film had a reflectance of light rays on one side of 0.8%, a gloss value of 80.5, a transmittance of 92% and a haze value of 8. Further, the self-healing property of the antireflection side was 100 g.

Further, as shown in Figure 5, an electromagnetic wave shield was prepared which was obtained by laminating an antireflection film 56 which functions also as a moistureproof film, a near infrared ray shielding film 54, a transparent conductive coating 52 and a glass plate 51. As the transparent conductive coating 52, a 7-layered coating composed of layers containing ZnO as the main component and layers containing Ag as the main component, alternately laminated on the substrate glass with the inner most and outer most layers being layers containing ZnO as the main component, was used.

The antiglare-antireflection film was bonded to the electromagnetic wave shield as shown in Figure 5 to obtain a protective plate for PDP. When a PDP having said protective plate for PDP was operated, the reflection of a light source in the room was reduced in the screen of the PDP, and clearer images were observed. Further, the antiglare-antireflection film was bonded to an electromagnetic wave shield having a copper mesh pattern as shown in Figure 4 to obtain a protective plate for PDP. When a PDP having said protective plate for PDP was operated, not only the same effects as mentioned above were obtained, but also moiré generated due to interference between the copper mesh pattern and picture elements of PDP disappeared, and clear images were observed.

COMPARATIVE EXAMPLE 1

A polyurethane resin layer was formed as follows. Namely, the same polyethylene terephthalate film as in Example 1 was coated with a mixture of the liquid A and the liquid B by die coating in a coating thickness of 200 μm, and made to pass through an oven having its temperature adjusted to 140°C for 10 minutes so that the reaction of the liquid A and the liquid B in the resin liquid was completed to form a polyurethane resin layer. Corona discharge treatment was applied to the surface of said polyurethane resin layer (no fine irregularities were formed), and said surface was spin-coated with a solution having a primer solution (CT-P10, trade name, manufactured by Asahi Glass Company, Limited) diluted to 0.5 wt% with isobutyl acetate, and then spin-coated with a solution having a solution of a non-crystalline fluorine-containing polymer (number average molecular weight: 50,000-80,000) (solution of CYTOP "CTL-805A", trade name, manufactured by Asahi Glass Company, Limited) diluted to 2 wt% with a solvent (CT-SOLV180, trade name, manufactured by Asahi Glass Company, Limited), followed by heating at 140°C for 10 minutes, to form an antireflection layer having the same thickness as in Example 1, and an antireflection (not antiglare) film of Comparative Example was obtained.

This antireflection film had a reflectance of light rays on one side of 1.0%, a gloss value of exceeding 150, a transmittance of 93% and a haze value of 0.3. Further, the self-healing property of the antireflection side was 100 g. Using this antireflection film, a protective plate for PDP as shown in Figure 5 was obtained in the same manner as in Example 1, and a PDP having said protective plate for PDP was operated, whereupon reflection of a light source in the room was confirmed in the screen. Further, using an electromagnetic wave shield having a copper mesh pattern as shown in Figure 4, a protective plate for PDP was obtained in the same manner as in Example 1, and a PDP having said protective plate for PDP was operated, whereupon moiré generated due to interference between the copper mesh pattern and picture elements of PDP was confirmed.

EXAMPLES 2 to 4

An antiglare-antireflection film of the present invention was obtained in the same manner as in Example 1 except for conditions as shown in the following Table 2. Further, a protective plate for PDP was obtained using said antiglare-antireflection film in the same manner as in Example 1.

Table 2

| Ex. | Production conditions | | |
|---|---|---|---|
| | Thickness of polyurethane resin layer | Gloss value of matted film | Thickness of antireflection layer |
| 1 | 200 µm | 35 | 100 nm |
| 2 | 200 µm | 30 | 100 nm |
| 3 | 200 µm | 40 | 100 nm |
| 4 | 200 µm | 50 | 100 nm |

EXAMPLE 5

A polyurethane resin layer was formed as follows. Namely, a polyethylene terephthalate film having a thickness of 100 µm was coated with a mixture of the liquid A and the liquid B by die coating in a coating thickness of 200 µm, and made to pass through an oven having its temperature adjusted at 120°C for 10 minutes so that the liquid A and the liquid B were reacted. On the surface of the resin layer thus reacted, a polyethylene terephthalate matted film having fine irregularities with a gloss value of 50 provided thereon, was laminated by continuously passing these films through a pair of pressure rolls so as not to have wrinkles, and the fine irregularities on the matted film was transferred to the polyethylene resin layer. The laminate thus obtained was cured in such a state in an oven having its temperature adjusted at 60°C for 15 hours to complete the reaction of the liquid A and the liquid B.

Then, the matted film was separated to obtain the polyurethane resin layer having a surface with fine irregularities. Corona discharge treatment was applied to the surface with fine irregularities of this polyurethane resin layer, and said surface was spin-coated with a solution having brominated phenoxy resin diluted to 2 wt% with cyclohexanone to form an interlayer (refractive index: 1.60, thickness: about 100 nm), and then spin-coated with a solution having a solution of a non-crystalline fluorine-containing polymer(number average molecular weight: 50,000-80,000) (solution of CYTOP "CTL-805A", trade name, manufactured by Asahi Glass Company, Limited) diluted to 2 wt% with a solvent (CT-SOLV180, trade name, manufactured by Asahi Glass Company, Limited), followed by heating at 140°C for 10 minutes, to form an antireflection layer having a thickness of about 100 nm, and an antiglare-antireflection film of the present invention was obtained. Further, using the antiglare-antireflection film thus obtained, a protective plate for PDP was obtained in the same manner as in Example 1.

EXAMPLE 6

A polyurethane resin layer was formed in the same manner as in Example 1. The surface with fine irregularities of this polyurethane resin layer was spin-coated with a solution having γ-aminopropyltrimethoxysilane diluted to 0.1 wt% with ethanol to form an adhesive layer, and then spin-coated with a solution having a solution of a non-crystalline fluorine-containing polymer (number average molecular weight: 50,000-80,000) (solution of CYTOP "CTL-805A", trade name, manufactured by Asahi Glass Company, Limited) diluted to 2 wt% with a solvent (CT-SOLV180, trade name, manufactured by Asahi Glass Company, Limited), followed by heating at 140°C for 10 minutes, to form an antireflection layer having a thickness of about 100 nm made of a non-crystalline fluorine-containing polymer, and an antiglare-antireflection film of the present invention was obtained. Further, using the antiglare-antireflection film thus obtained, a protective plate for PDP was obtained in the same manner as in Example 1.
Results of evaluations in Examples and Comparative Examples are shown in Table 3.

Table 3

| | Ex. | | | | | | Comp. Ex. 1 |
|---|---|---|---|---|---|---|---|
| | 1 | 2 | 3 | 4 | 5 | 6 | |
| 1. Reflectance of light rays on one side (%) | 0.8 | 0.7 | 0.8 | 0.9 | 0.3 | 0.8 | 1.0 |
| 2. Gloss value | 80.5 | 70.0 | 85.0 | 85.0 | 125.0 | 80.5 | Over 150 |
| 3. Transmittance (%) | 92 | 91 | 92 | 93 | 94 | 92 | 93 |
| 4. Haze value (%) | 8 | 11 | 8 | 5 | 3 | 8 | 0.3 |
| 5. Self-healing property (g) | At least 30 | At least 30 | At least 30 | At least 30 | At least 30 | At least 30 | At least 30 |
| 6. Flexibility | Good | Good | Good | Good | Good | Good | Good |
| 7. Scratch resistance | Good | Good | Good | Good | Good | Good | Good |
| 8. Comfortableness to write on with a pen | Good | Good | Good | Good | Good | Good | Good |
| 9. Fingerprint removability | Good | Good | Good | Good | Good | Good | Good |
| 10. Durability | Good | Good | Good | Fairly good | Good | Good | Good |
| 11. Antiglare property | Good | Good | Good | Good | Good | Good | Poor |
| 12. Antireflection property | Good | Good | Good | Good | Good | Good | Good |
| 13. Moire disappearance property | Good | Good | Good | Good | Good | Good | Poor |

The above various physical properties and performances of the antiglare-antireflection films of Examples and Comparative Examples were measured as follows.

1. Reflectance of light rays on one side

A test specimen having its non-measurement side coated with e.g. a black paint for delustering so as not to be affected with the reflection in said side, was used and the spectral reflectance factor was measured with a spectrophotometer UV-3100 manufactured by Shimadzu Corporation to calculate the reflectance of light rays on one side in accordance with JIS Z8701 from the following formula:

$$Y=K \int_{380}^{780} S(\lambda)y(\lambda)R(\lambda)d\lambda$$

Y:       Reflectance of light rays on one side
K:       Proportionality factor (constant)
S($\lambda$):   Distribution of standard light to be used for display of color
y($\lambda$):   Color matching functions in XYZ display system
R($\lambda$):   Spectral reflectance factor

In the present invention, the reflectance of light rays on one side is preferably at most 2%. Particularly when it is at most 1%, reflection of outside light will be significantly reduced in the daytime, and when it is at most 0.5%, significantly no reflected image will be seen in the screen.

2. Gloss value

Measured by using a glossmeter (PG-50M manufactured by Nippon Denshokusha), while a black felt was placed on the non-measurement side so that the back side would not affect the measurement.

3. Transmittance

Measured by using a spectrophotometer (UV-3100 manufactured by Shimadzu Corporation), and the average of values as measured at a wavelength ranging from 380 to 780 nm was taken. Here, the measurement was carried out in accordance with JIS K6714, and the transmittance of the incident light from the antireflection layer side was measured.

4. Haze value

Measured by using a haze computer (HGM-2DP manufactured by Suga Shikenkisha) in accordance with JIS K7105.

5. Self-healing property

Measured by a HEIDON scratch tester employing a diamond chip having a tip diameter of 15 $\mu$m as a scratcher at 23°C under a relative humidity of 50%. In the present invention, the self-healing property is preferably at least 10 g, particularly preferably at least 30 g.

6. Flexibility

Represented by the elastic modulus at 23°C under a relative humidity of 50%, and the case where said elastic modulus is from $7x10^1$ to $6x10^4$ N/cm$^2$ was rated as "good".

7. Scratch resistance

Taber test was carried out employing CS-10F as truck wheels under a load of 500 g at 23°C under a relative humidity of 50%, and the case where the haze value increase after 100 cycles was less than 10%, was rated as "good".

8. Comfortableness to write on with a pen

The antireflection film was bonded to a hard plate of e.g. glass, and characters were inputted on the surface, and the case where the experimenter felt comfortable to write on, was rated as "good".

Here, the comfortableness to write on with a pen is a property required when the antiglare-antireflection film of the present invention is used for a touch panel (or a touch panel using PDP), and in a case where the tip of the pen for pen-inputting is made of a hard resin, the pen tip is likely to slip on said film if the film has no appropriate elasticity and resistance, whereby errors in copying and input errors are likely to result. Accordingly, moderate elasticity and resistance are required for the above film to obtain comfortableness to write on with a pen.

9. Fingerprint removability

Fingerprint (sebum) was put on the surface of the film, and the surface on which the sebum was put, was wiped with a cloth for ten back and forth motions under a load of 500 g, and the case where the sebum completely disappeared was rated as "good",

10. Durability

Evaluations were carried out respectively after the film had been left for 1,000 hours at 60°C under a relative humidity of 90% and after the film had been left for 1,000 hours at 80°C without humidification. The case where the changes in reflectance from the initial values were within ±2%, and the changes in transmittance from the initial values were within ±5%, in both evaluations, was rated as "good".

11. Antiglare property

A protective plate for PDP obtained by using the antiglare-antireflection film was attached to a device, and the case where reflection of outside light was reduced as compared with a case where a flat antireflection film (a film corresponding to the film of Comparative Example 1) was used (instead of the antiglare-antireflection film of the present invention), was rated as "good".

12. Antireflection property

A protective plate for PDP obtained by using the antiglare-antireflection film was attached to a device, and the case where reflection of outside light was reduced as compared with a case where a flat film having no antireflection treatment applied thereto (a film corresponding to the film of Comparative Example 1 having no antireflection layer) was used (instead of the antiglare-antireflection film of the present invention), was rated as "good".

13. Moiré disappearance property

The antiglare-antireflection film was bonded to an electromagnetic wave shield having a copper mesh pattern as shown in Figure 4 to obtain a protective plate for PDP, and a PDP having said protective plate for PDP was operated. The case where moiré generated due to interference between the copper mesh pattern and the picture elements of PDP disappeared, and clear images were observed, was rated as "good".

According to the present invention, an antireflection film which is excellent in antireflection properties, and in addition, excellent in prevention of reflection of light sources and antiglare properties, is provided.

**Claims**

1. An antiglare-antireflection film which comprises a polyurethane resin layer having a surface with fine irregularities and an antireflection layer made of a non-crystalline fluorine-containing polymer provided on the surface with fine irregularities, and which is transparent as a whole.

2. The antiglare-antireflection film according to Claim 1, wherein the fine irregularities have a roughness represented by a gloss value of from 30 to 150 as measured by a 60° glossmeter.

3. The antiglare-antireflection film according to Claim 1 or 2, wherein the translucency is represented by a visible light transmittance of at least 80%.

4. The antiglare-antireflection film according to Claim 1, 2 or 3, which has a haze value of from 3 to 15%.

5. The antiglare-antireflection film according to any one of Claims 1 to 4, wherein the antireflection layer has a thickness of from 10 to 1,000 nm.

6.  The antiglare-antireflection film according to any one of Claims 1 to 5, wherein, between the antireflection layer and the polyurethane resin layer, an interlayer made of a resin or an interlayer made of an inorganic oxide, having a refractive index higher than the refractive index of said polyurethane resin, is provided.

7.  The antiglare-antireflection film according to any one of Claims 1 to 6, which has a reflectance of light rays on one side of at most 2%.

8.  The antiglare-antireflection film according to any one of Claims 1 to 7, which has an elastic modulus of from $7 \times 10^1$ to $6 \times 10^4$ N/cm$^2$ at 23°C under a relative humidity of 50%.

9.  A protective plate for a plasma display panel, which comprises the antiglare-antireflection film as defined in any one of Claims 1 to 8.

10.  The protective plate for a plasma display panel according to Claim 9, which has a metal mesh pattern or a transparent conductive coating formed on the side opposite to the side on which the antireflection layer is formed.

11.  A process for producing an antiglare-antireflection film, which comprises a step of forming a semicured polyurethane resin layer on a substrate film, a step of forming fine irregularities on the surface of said resin layer, a step of completely curing the polyurethane resin, and a step of forming on the surface with fine irregularities, an antireflection layer made of a non-crystalline fluorine-containing polymer.

12.  The process for producing an antiglare-antireflection film according to Claim 11, wherein the fine irregularities are transcribed from a matted film having fine irregularities.

# FIG. 1

# FIG. 2

# F I G. 3

MAGNIFICATION
AT A

MAGNIFICATION
AT B

MAGNIFICATION
AT C

# F I G. 4

OBSERVER SIDE

—43
—41
—44
—42
—45

PDP SIDE

# F I G. 5

OBSERVER SIDE

—53
—51
—52
—54
—56

PDP SIDE

## EUROPEAN SEARCH REPORT

| | | European Patent Office | | | Application Number |
|---|---|---|---|---|---|
| | | | | | EP 00 11 4906 |

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | DE 198 29 172 A (UNIV KONSTANZ) 5 January 2000 (2000-01-05) * the whole document * | 1-12 | C03C17/34 G02B1/10 |
| A | US 4 180 609 A (VASSILIOU EUSTATHIOS) 25 December 1979 (1979-12-25) * claims 1-16 * | 1 | |
| A | "CHEMICAL ABSTRACTS + INDEXES,US,AMERICAN CHEMICAL SOCIETY. COLUMBUS" CHEMICAL ABSTRACTS + INDEXES,US,AMERICAN CHEMICAL SOCIETY. COLUMBUS, vol. 117, no. 6, 10 August 1992 (1992-08-10), page 367 XP000374703 ISSN: 0009-2258 * abstract * | 1-7 | |
| A | EP 0 835 850 A (AXIVETRO S A S DI MARTELLI GIU) 15 April 1998 (1998-04-15) * claims * | 1-12 | |
| D,A | US 5 449 558 A (HASEGAWA TAKAFUMI ET AL) 12 September 1995 (1995-09-12) * claims * | 1 | TECHNICAL FIELDS SEARCHED (Int.Cl.7) C03C G02B |

The present search report has been drawn up for all claims

| Place of search | Date of completion of the search | Examiner |
|---|---|---|
| THE HAGUE | 1 November 2000 | Reedijk, A |

EPO FORM 1503 03.82 (P04C01)

## ANNEX TO THE EUROPEAN SEARCH REPORT
## ON EUROPEAN PATENT APPLICATION NO.

EP 00 11 4906

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2000

| Patent document cited in search report | | Publication date | Patent family member(s) | | Publication date |
|---|---|---|---|---|---|
| DE 19829172 | A | 05-01-2000 | AU | 4902399 A | 17-01-2000 |
| | | | WO | 0000854 A | 06-01-2000 |
| US 4180609 | A | 25-12-1979 | BE | 843999 A | 10-01-1977 |
| | | | BE | 879476 A | 18-04-1980 |
| | | | BR | 7604494 A | 02-08-1977 |
| | | | CA | 1069778 A | 15-01-1980 |
| | | | DE | 2631036 A | 27-01-1977 |
| | | | EP | 0046746 A | 10-03-1982 |
| | | | FR | 2317343 A | 04-02-1977 |
| | | | GB | 1560781 A | 13-02-1980 |
| | | | JP | 52010386 A | 26-01-1977 |
| | | | JP | 56501277 T | 10-09-1981 |
| | | | LU | 75332 A | 01-04-1977 |
| | | | NL | 7607638 A | 13-01-1977 |
| | | | SE | 432942 B | 30-04-1984 |
| | | | SE | 7607822 A | 12-01-1977 |
| | | | WO | 8100972 A | 16-04-1981 |
| EP 0835850 | A | 15-04-1998 | IT | MI962084 A | 08-04-1998 |
| US 5449558 | A | 12-09-1995 | JP | 7168005 A | 04-07-1995 |

EPO FORM P0459

For more details about this annex : see Official Journal of the European Patent Office, No. 12/82